# EUROPEAN PATENT APPLICATION

(11) **EP 3 088 851 A1**
(43) Date of publication of application: **02.11.2016**
(21) Application number: 15001251.6
(22) Date of filing: 28.04.2015
(51) Int. Cl.: G01F 11/04, B05B 11/00, B05B 11/04

(54) **LIQUID DOSING DEVICE**

(71) Applicant: Aptar Freyung GmbH, 94078 Freyung (DE)
(72) Inventor: Jäckel, Gerhard F.K., D-94078 Freyung (DE)
(74) Representative: Schmid, Nils T.F.

(57) **Abstract**

A liquid dosing device for dispensing a metered dose of liquid from a squeezable container, comprising an outlet passage leading to a discharge opening; a dosing chamber positioned behind said discharge opening and having at least one entrance opening allowing a charging flow of liquid from said container into said dosing chamber under the influence of weight of liquid, and a drive opening allowing a control flow of liquid from said container into said dosing chamber in response on a rise of pressure of liquid in the squeezable container; a floating plunger movably arranged in the dosing chamber so as to advance upon said rise of pressure from a rest position in which under the influence of a lifting force of buoyancy said floating plunger closes said drive opening, into a blocking position in which said floating plunger blocks said outlet passage, wherein said floating plunger when advancing into said blocking position, pushes said liquid charged into said dosing chamber, to said outlet passage; a stop seat upon which said floating plunger acts in its blocking position, and a sealing lip for closing said outlet passage, being arranged such that a seat-sided portion of the floating plunger or a plunger-sided portion of the stop seat and said sealing lip is formed, particularly injection-mold, of one single piece of the same plastic material.

## Description

The present invention relates to a liquid dosing device by which a controlled, metered dose of liquid can be repeatedly dispensed. A preferred field of use of said liquid dosing device is domestic or household use, or containers for detergents for cleaning, fabric conditioners or the like. Other fields of use include a dosing apparatus for manually and automatically dosing dishwashing liquids, hair-care products, skin products, care applications, liquid medications, such as cough syrup, liquid food, such as sauce or syrup, and the like. When dosing a precise quantity shall be kept even if the container is used and stored upside down, the liquid dosing device facing down.

A liquid dosing device is particularly known from WO 2005/049477 A2 to be improved by the present invention. Particularly, said liquid dosing device has an outlet passage leading to a front discharge opening, past or around a control or dosing chamber positioned behind the front discharge opening. Said dosing chamber comprises at least one charge opening allowing a restricted charge flow of liquid from the container interior into the dosing chamber. Further, the known liquid dosing device comprises a plunger or a sliding piston moving in the control or dosing chamber and dividing the control or dosing chamber in a drive chamber section and a dose chamber section. Said piston is adapted to advance during dispensing, under the influence of liquid forced into the drive chamber section behind the sliding piston through a drive or control opening. When the sliding piston has advanced to a blocking or end position the dosing shall be terminated and the outlet passage shall be blocked. The outlet path of liquid leads from the container interior forwardly, past the outside of the dosing chamber and then radially inward through the at least one charge opening in front of the sliding piston.

In order to control said advancing of the sliding piston towards the blocking position, a dump valve arrangement is provided at the back to the dosing chamber to allow liquid to escape more rapidly from the drive chamber section after a full dose has been dispensed. The dump valve allows liquid to enter the device chamber section during dispensing via the control opening. The dump valve comprises a dump valve seat and a dump valve member entering the dump valve seat to seal the control opening in a closed condition. The closed condition is generated when the valve member is forced to the valve seat under the influence of the pressure rise in the liquid by squeezing the container. In order to bring the sliding piston back into its rest position, the container is to be turned upright and the squeeze is to be released. Under gravity of the liquid and the sliding piston, the last finds back its rest position. Even if the squeezed container exerts a sufficiently powerful suction, it may be possible to restore the control piston to its end position without having to bring the container into the upright position.

However, the known dosing device has disadvantages in that the restoring action heavily depends on the upright position of the container and, further, said dump valve arrangement introduces an increased number of parts. Further, it turns out that the sliding piston often jams within the dosing chamber due to residues accumulating and drying up close to the dosing chamber, which might affect the consistency of the dosing action.

A differential measuring device is known from US 2011/0277857 A1. In one of the embodiments of US 2011/0277857 A1 a floating valve is provided which can open and close the discharge outlet and the control or drive opening. The measuring function is achieved by a liquid flow exiting the discharge outlet as long as the valve is not in the closing or end position. During the travel of the valve from the rest position to the end position, a liquid bypasses the valve and finally is discharged. However, it turned out that the measuring function cannot be achieved if the pressure applied to the squeezable container generates a pressure difference on the valve which is equilibrated with the lifting buoyancy forces. In this operation situation, a permanent outflow of the metered device will occur.

EP 2 444 782 A1 discloses an apparatus and means for repeatedly dispensing controlled doses of liquid. The structure of this known liquid dosing device is similar to the above-mentioned one of WO 2005/049477 A1. The disadvantages identified for the liquid dosing device according to WO 2005/049477 A1 shall be overcome by an improved drainage of the dosing chamber. A ratio of total surface of said charge opening and said control opening shall be provided, however, the dump valve arrangement still having the disadvantages as identified above.

Further, WO 2010/023462 A1 discloses a liquid dosing device similar to the above-mentioned one of WO 2005/049477 A1. Both embodies suffer from a non-sufficient recovery movement of the piston to be caused by the drop of internal pressure and a backflow. It turned out that said backflow does not reliably bring the piston back to its rest position in which the dosing chamber shall be fully charged with the liquid to be metered. WO 2010/023462 A1 refers to an improvement of terminating the dosing in the blocking position of the piston. In the blocking position, the sliding piston stops at the outlet passage, particularly at a rearwardly extending tubular formation. Said tubular formation is lined with an elastomeric sealing insert shaped around the tubular formation in order to form a sealing engagement region. However, it turned out that said elastomeric insert does not reliably seal the dosing device when the dosing is terminated, but squeezing forces still being applied to the container. Besides, the known dosing device still suffers from the insufficient restoring action of the sliding piston for preparing the dosing device for a new dosing action particularly in an upside-down position of the container.

It is an object of the invention to provide a liquid dosing device for dispensing a metered dose of liquid from a squeezable container which overcomes the above-mentioned disadvantages, particularly has a well-functioning metering function of a consistent dosage even if the container is preferably stored and used in an up-turned position (the front of the dosing device and the discharge opening facing down), however, said dosing action terminates abruptly without a further leakage at outlet passage, even without a high squeezing pressure remains applied to the container.

This object is solved by the features of claim 1. Accordingly, a liquid dosing device for dispensing a metered dose of liquid from the squeezable container is provided. Said liquid dosing device comprises an outlet passage leading to a discharge opening which is preferably the front end of the outlet passage (the terms "front", "rear", "behind", etc. indicates the position of elements and regions of the dosing device in the axial direction defined by the dosing direction of the liquid dosing device, the discharge opening being at the front end of the device and particularly the drive opening being on the opposite rear end of the device). The discharge opening can be closed by an optional cap hinged to the body of the liquid dosing device. Said outlet passage is preferably realized by a tubular portion having a circular passage section. Further, the liquid dosing device comprises a dosing chamber position behind said discharge opening. Said dosing chamber defines at least one entrance (charge) opening allowing a charge flow of liquid from said container into the dosing chamber particularly under the influence of weight of liquid, if no outside pressure is applied to the squeezable container. Said at least one entrance opening is positioned essentially at the front end of the dosing chamber adjacent the outlet passage so that, when the container is orientated upside-down (the dosing device / the discharge opening facing down), the container liquid passes by outside the dosing chamber and towards the at least one entrance opening to only fill the respective section of the dosing chamber (an optional blocking valve as disclosed in EP 14 003 059.4 can be positioned in the outlet passage in order to block the drainage of liquid during the action of filling the respective section of the dosing chamber). Further, the dosing chamber comprises at least one drive or control opening allowing a control flow of liquid from said container into said dosing chamber in response on a rise of pressure of liquid in the squeezable container, caused by applying a pressure force to the squeezable container. Said control or driving flow creates the driving pressure in order to discharge the metered dose within the dosing chamber. Further, the liquid dosing device comprises a floating plunger which divides the dosing chamber in a front compartment (dose chamber section) and a rear compartment (drive chamber section), wherein the front compartment defining the volume of liquid to be dosed, the rear compartment is charged by liquid via the drive opening. The body of the floating plunger comprises a lower overall density as the liquid in order to float in the liquid. If the floating plunger is submerged in the liquid, buoyancy forces displace the floating plunger opposite the gravity direction. Said floating plunger is movably arranged in the dosing chamber so as to advance upon said rise of pressure in the rear compartment, starting from a rest position. In said rest position, if no squeeze pressure is applied to the container, the floating plunger closes said rear drive opening (particularly only) under the influence of lifting force of buoyance acting on a floating plunger within the liquid. As soon as the container is squeezed, the internal pressure makes liquid enter the rear compartment through the drive opening so that the movable floating plunger is advanced to the blocking position in which said floating plunger blocks said outlet passage. Particularly no further means, as elastic elements, for pushing the floating plunger into the rest or blocking positions are installed. As soon as the outlet passage is blocked, the dosing is terminated. Said floating plunger when advancing into the blocking position pushes said liquid having been charged into said front compartment via said at least one entrance opening, to said outlet passage. Because of the high internal squeezing pressure the liquid pressed out of the front compartment will not enter back the container via said at least one entrance opening, rather will give way into the outlet passage. Further, the liquid dosing device comprises a stop seat upon which said floating plunger acts in its blocking position. The more detailed structure of the dosing function of the liquid dosing device according to one possible embodiment for realizing the invention is described in the earlier European patent application EP 14 003 059.4 which shall be incorporated by reference in the present description of the invention.

According to the invention, the liquid dose device further comprises a sealing lip for closing said outlet passage. Said sealing lip is arranged such that a seat-sided portion of the float plunger or a plunger-sided portion of the stop seat and said sealing lip is unitarily formed, particularly manufactured, preferably injection-mold, of one single piece of the same plastic material. An example of said same plastic material is polyethylene, polypropylene and the like. It shall particularly be noted that said plastic material by which the sealing lip is exclusively realized, shall be harder than common elastomeric material, however, the elasticity of the sealing lip is realized by its structural geometry rather than by the choice of material. Preferably, the sealing lip, particularly the sealing contact structure of the sealing lip establishing the circumferential sealing surface and the particularly corresponding structure of the floating plunger or the stop seat is free of any elastomeric material. Besides, particularly the corresponding structure of the floating plunger or the stop seat, cooperating with the sealing lip shall preferably not comprise any elastomeric material, rather being realized by a hard plastic material, as polypropylene and polyethylene, particularly by the same hard plastic material as the sealing lip. It turned out that by providing a sealing lip unitarily formed with the floating plunger or the stop seat, the function of the metered dosing as well as the manufacturing effort is not deteriated, however, the termination of a precise dose is strongly improved and the design of the liquid dosing device is kept simple. Even weak forces are applied to the squeezable container causing weak forces acting on the floating plunger to be pushed against said stop seat, the sealing lip achieves to circumferentially seal the outlet passage although forces of buoyance advance said floating plunger backwards away from said stop seat.

According to a preferred embodiment of the invention, said sealing lip protrudes from said seat-sided, particularly disc-like portion of the floating plunger. Said seat-sided portion is formed like a flat piston disk facing the front compartment charged with liquid to be dispensed. Alternatively, said sealing lip protrudes from said plunger-sided portion of said stop seat, particularly having an annular particularly circular shape. Said sealing lip protrudes by at least 1 mm, preferably between 1 mm and 3 mm from the respective portion. Particularly, the sealing lip comprises an annular, particularly plate-like lip body having an annular, particularly reinforced foot portion merging into the seat-sided portion or into the plunger-sided portion and continuously extending to an annular sealing end/edge forming a circumferentially closed sealing contact with the other seat-sided portion of the floating plunger or the plunger-sided portion of the stop seat. Preferably, the cross-section of said lip body from said annular foot portion to said annular sealing end continuously reduces into an annular tip.

According to a preferred embodiment of the invention, said sealing lip extends from said seat-sided portion of the floating plunger or said plunger-sided portion of the stop seat in a radial direction. It shall be clear that the protrusion of the sealing lip from the respective portion, particularly at said annular foot portion, comprises an axial component of direction, particularly the strongest axial component at the annular foot portion of the lip body particularly continuously decreasing towards the tip of the lip. Particularly said sealing lip formed unitarily with said seat-sided portion of the float plunger, extends radially outwardly towards said seat stop particularly formed by a tubular portion that extends axially towards the dosing chamber. However, the sealing lip formed unitarily with said plunger-sided portion of the stop seat, extends radially inwardly towards the floating plunger. Preferably, the radial extension of said sealing lip unitarily formed with the seat-sided portion of the float plunger is dimensioned such that the sealing end of the sealing lip is positioned vis-à-vis an annular edge of the particularly tubular plunger-sided portion of the stop seat in the blocking position. Said annular edge can form the end of a tubular end portion of the stop seat extending towards the dosing chamber.

According to a preferred embodiment of the invention, said sealing lip particularly formed unitarily with said plunger-sided portion of the stop seat defines a particularly circular surface representing the rear end of the outlet passage. Alternatively, said sealing lip unitarily formed with the seat-sided portion of the floating plunger, in the blocking position, engages an annular edge of the plunger-sided portion of the stop seat, said annular edge forming the rear end of the outlet passage opposite the front discharging opening.

According to a further development of the invention, the sealing lip is elastically deformable, depending on the force of pressure acting on the sealing lip, particularly on the free annular sealing end of the sealing lip. The sealing lip provides an elastic elongation in axial direction being defined by the extension of the outlet passage. Said elastic elongation can result in an amplitude of elastic displacement of the floating plunger after an initial contact of at least 0.5 mm, 0.7 mm or even 1.0 mm. Said axial elastic elongation can range from 0.4 mm to 1.5 mm, however, preferably less than 2.5 mm. An elastic elongation is at least 0.02 mm, 0.05 mm or 0.1 mm, particularly in a range of 0.02 mm to 0.3 mm, preferably in a range of 0.5 mm to 2.5 mm, if the floating plunger acts on the sealing lip by a force of pressure of 2 N or 1 N. Said elastic elongation is at least 0.15 mm, particularly in a range of 0.2 mm to 0.5 mm, preferably 0.23 to 3.5 mm, if a force of pressure of 4 N or 3 N is applied. Said elastic elongation is at least 0.3 mm or at least 0.4 mm, particularly in a range of 0.2 mm to 0.7 mm, preferably in a range of 0.3 mm to 0.6 mm, if a force of pressure of 10 N, 8 N or 6 N is applied. Said elastic elongation of the sealing lip is at least 0.5 mm or at least 0.6 mm, particularly in a range of 0.4 mm to 0.9 mm, preferably in a range of 0.5 mm to 0.85 mm, if a force of pressure of 20 N or 15 N is applied. Said elastic elongation of the sealing lip is at least 0.6 mm or at least 0.8 mm, particularly in a range of 0.6 mm to 1.2 mm, preferably in a range of 0.8 mm to 1.1 mm, if a force of pressure of 30 N or 25 N is applied. Said elastic elongation is at least 0.8 mm or at least 0.9 mm, particularly in a range of 0.8 mm to 1.4 mm, preferably in a range of 0.9 mm to 1.3 mm, if a force of pressure of 50 N or 40 N is applied. Said elastic elongation is at least 0.9 mm or at least 1.0 mm, particularly in a range of 0.9 mm to 1.7 mm, preferably in a range of 1.05 mm to 1.5 mm, if a force of pressure of 60 N or 70 N is applied.

Said axial elongation can be measured by detecting the movement of the floating plunger as soon as the floating plunger contacts the sealing lip (without a deformation of the sealing lip, yet) and measuring the displaced position after a respective force of pressure is applied to the floating plunger. For measuring the force of pressure, conventional measuring devices can be used. Said measurements shall be undertaken without any liquids within the dosing chamber. Regular environment pressure and temperature conditions shall be present.

According to a preferred embodiment of the invention, the sealing lip shall be designed such that it delivers an axial elastic restoring force of more than 0.4 N, 1 N or 2 N in case of an elastic deformation of said sealing lip of at least 0.1 mm, 0.2 mm or 0.3 mm. It shall be clear that the elastic elongation of said sealing lip can be measured by the movement of the floating plunger after the contact with the sealing lip and after the respective force of pressure is applied. Particularly, an elastic restoring force of more than 2 N or 2,5 N is delivered in case of an elastic elongation of said sealing lip of more than 0.2 mm or 0.3 mm. Preferably, an elastic restoring force of more than 3 N, 4 N or 5 N is delivered in case of an elastic elongation of at least 0.3 mm or 0.4 mm. Particularly, an elastic restoration force of more than 6 N, 8 N or 10 N is delivered in case of an elastic elongation of at least 0.5 mm or 0.6 mm. Particularly, a restoring force of more than 10 N or 15 N is delivered in case of an elastic elongation of at least 0.6 mm, 0.7 mm or 0.8 mm. Particularly, an elastic restoration force of more than 20 N is delivered in case of an elastic deformation of at least 0.8 mm or 0.9 mm. Particularly, an elastic restoring force of at least 20 N or 25 N is delivered in case of an elastic elongation of at least 1.0 mm or 1.1 mm.

According to a further development of the invention, the sealing lip forms a sealing surface facing the seat-sided portion of the floating plunger or the plunger-sided portion of the stop seat depending with which of both the sealing surface comes in contact in the blocking position for sealingly closing the outlet passage. Said sealing surface is formed convexly. Particularly, the sealing lip comprises a surface opposite the sealing surface being formed convexly. Therefore, the annular lip body is starting from the annular foot portion particularly continuously arcuated towards the annular tip of the sealing lip.

According to a preferred embodiment of the invention, said sealing lip has a rotationally symmetrical shape, particularly being fantail-shaped or cup-shaped particularly having a central orifice.

According to a preferred embodiment of the invention, said stop seat is realized by a tubular or tube portion forming at least a part of the outlet passage. Said tube portion is part of a mounting ring which is a separately manufactured element of the dosing device, particularly with respect to the general base or carrier of the dosing device. Said mounting ring comprises an attachment portion for being attachable to a base or carrier which can be considered as the general housing of the dosing device. Said base can be configured to be screwed to a threated neck of the squeezable container. Said base can comprise a hinged cap that shall close the discharge opening if the squeezable container is not in use. Further, the attachment portion of the mounting ring, the tube portion and the sealing lip may be unitarily realized, particularly manufactured, of one single piece of the same plastic material. Particularly, said mounting ring is designed to fix a blocking valve, preferably being realized of elastomeric material being softer than the material of the sealing lip. Said blocking valve may be disposed within the outlet passage. The function of said blocking valve is in more detail described in above-mentioned European patent application EP 14 003 059.4 to be referenced. Preferably, said blocking valve is arranged behind said discharge opening and in front of the dosing chamber. The above-mentioned tube portion does not comprise any elastomeric material particularly for forming the contact sealing area with the movable floating plunger in order to establish a precise and consistent elastic deformation of the sealing lip made of plastic material.

According to a preferred embodiment of the invention, the floating plunger comprises a carrier portion forming the seat-sided portion and holding said sealing lip, wherein particularly said carrier portion and a sealing lip is manufactured, particularly injection-molded, of one single piece of plastic. Particularly the floating plunger comprises a closed cavity particularly confined by said carrier portion. Preferably, said floating plunger consists of two separable portions in order to provide closed cavity for establishing buoyancy forces for reliably bringing back the floating plunger into its rest position.

According to a preferred embodiment of the invention, said floating plunger comprises a contact surface facing the sealing lip unitarily formed with said plunger-sided portion of the stop seat. Additionally or alternatively said floating plunger is recessed such that an annular, particularly circular, sealing end of the sealing lip is received in the recess in the blocking position. Said recess may be formed as a blind hole in the body of the said floating plunger.

Further embodiments of the invention are described in the sub-claims.

Further advantages, features and characteristics of the invention become obvious from the following description of preferred embodiments of the invention, shown in the enclosed drawings according to which
- Fig.1: is a diagram showing the elastic elongation of the sealing lip/displacement of the floating plunger with respect to the force of pressure applied to the sealing lip, according to a preferred embodiment of the invention;
- Fig. 2: is a cross section of the liquid dosing device according to a first embodiment of the invention, the cross section being taken along the section line II-II according to Fig. 3;
- Fig. 3: is a top view of the liquid dosing device according to Fig. 2;
- Fig. 4: is a perspective view of the liquid dosing device according to Fig. 2 or 3;
- Fig. 5: is a cross section of a clamp ring inserted in the liquid dosing device according to Figs. 2 to 4, the section being taken along the section line V-V of Fig. 7;
- Fig. 6: is a side view of the clamp ring according to Fig. 5;
- Fig. 7: is a top view of the clamp ring according to Figs. 5 and 6;
- Fig. 8: is a perspective view the clamp ring according to Figs. 5 to 7;
- Fig. 9: is a cross section of the liquid dosing device according to a second embodiment of the invention, the cross section being taken along the section line IX-IX according to Fig. 10;
- Fig. 10: is a top view of the liquid dosing device according to Fig. 9;
- Fig. 11: is a perspective view of the liquid dosing device according Figs. 9 and 10;
- Fig. 12: is a cross section of the floating plunger of the liquid dosing device according to a second embodiment of the invention.
- Fig. 13: is a side view on the floating plunger according to Fig. 12;
- Fig. 14: is a top view of the floating plunger according to Figs. 12 and 13; and
- Fig. 15: is a perspective view of the floating plunger according to a second embodiment.

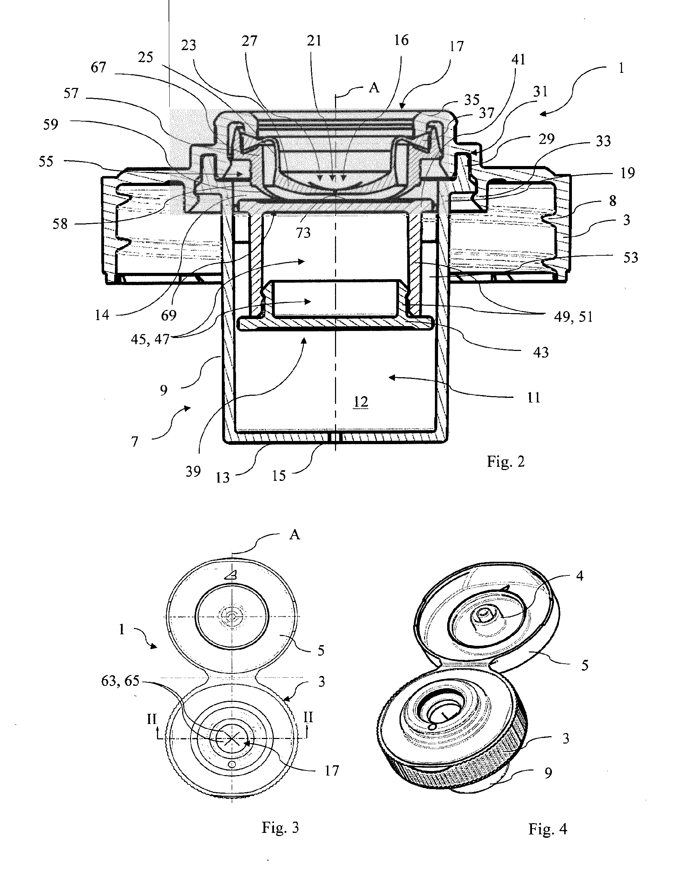

In Figs. 2 to 4 and 9 to 11, a liquid dosing device is generally associated to reference sign 1. The liquid dosing device 1 comprises a base 3 having an inner thread 8 for fixing the liquid dosing device 1 to a squeezable liquid carrying container (not shown). Further, the liquid dosing device 1 comprises a cap 5 which is hinged to the base 3 having an axially extending nose 4 for closing an outlet passage 16 particularly a discharge opening 17 of the outlet passage 16. In Figs. 3, 4, 10 and 11, a liquid dosing device 1 is shown including details of the outside. The base 3 has a serrated surface and is to be mounted on said container (not shown).

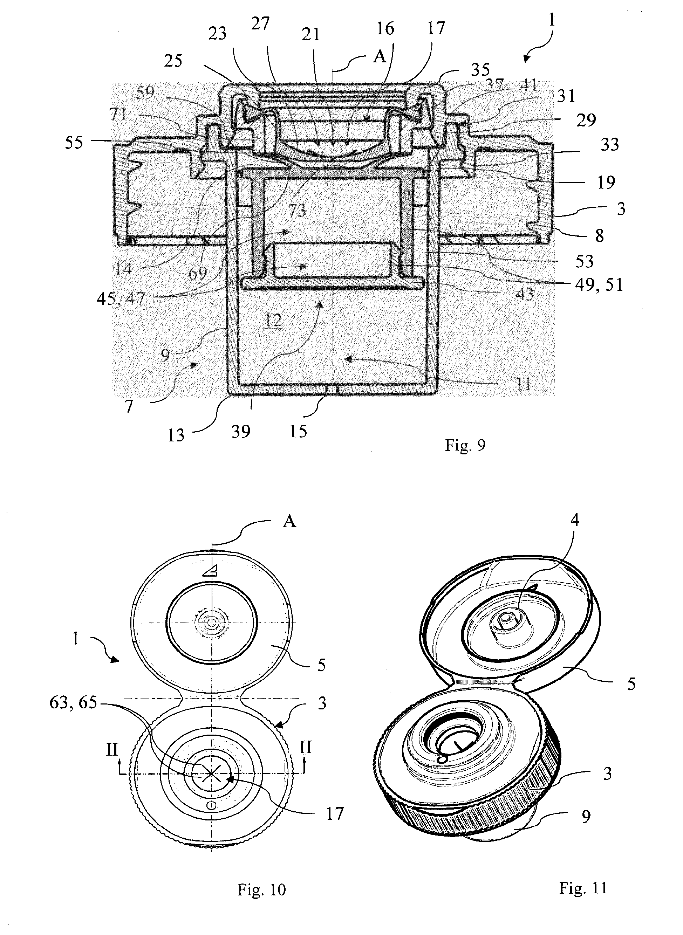

The liquid dosing device 1, according to Figs. 2 and 9, in general comprises a cylindrical body 7 having an essentially cylindrical sidewall 9 that extends concentrically relative to a rotational axis A of the base 3, cap 5 and/or device 1. The cylindrical body 7 forms a dosing chamber 11 defining a dosing and driving volume. The dosing chamber 11 is separated into two compartments 12, 14 the volume of which depends on an axial position of an axially movable floating plunger 39 guided by the cylindrical sidewall 9 of the cylindrical body 7. The rear compartment 12 is confined by a horizontal base plate 13 of the cylindrical body 7 and the rear portion of the floating plunger 39. The front compartment 14 is open to the outlet passage 10 and is confined by the front portion of the floating plunger 39 and the cylindrical sidewall 9, however, as soon as the floating plunger 39 gets in contact with an element of a stop seat 55 the front compartment 14 is sealingly closed. The structure for closing the front compartment 14 will be explained in detail later.

The cylindrical body 7 forming the dosing chamber 11 is fixedly connected to the base 3 by means of a geometric clamping structure 29. The cylindrical body 7 particularly the base plate 13 comprises a drive opening 15 formed as a throughhole in the base plate 13 centrically relative to the axis A. On the opposite side of the base plate 13, which faces the outlet passage 16, the discharge outlet or opening 17 is formed in base 3.

The cylindrical sidewall 9 of the dosing chamber 11 comprises at its front section at least one, exactly two, three or four charge openings 19 defined by cutouts preferably equally sized and circumferentially equally distributed around the cylindrical sidewall 9 essentially on the same axial level.

A blocking valve 21 is installed between the dosing chamber 11 and the discharge opening 17. The elastomeric blocking valve 21 comprises a valve closure member 23 that is bendable relative to an anchor ring 25 fixed to the base 3 to open and close a throughway from the dosing chamber 11 to the discharge opening 17. Particularly regarding the structure and the functioning of the blocking valve 21, it is referred to the technical content of the earlier European patent application EP 14 003 059.4. The blocking valve 21 comprises a valve closure element 23 which is realized by a thin walled, dome shaped element partly like a membrane. The blocking valve 21 is made from a silicon elastomer and is glued or clamped sealingly within an interior circumference of the base 3. The silicon membrane is slotted in an X-like fashion to define four elastic snap-over flaps 63, 65. The snap-over flaps 63, 65 decrease in thickness from radially outward to radially inwards to provide a bending stiffness gradient adjusted with respect to the pressure gradient within the dosing chamber 11, when the container is squeezed.

The dosing chamber 11 comprises a mounting rim 29 which is slidably received within a complementary installment groove 31 formed by base 3. The mounting rim 29 is axially fixed by a snap tap 33 extending radially from the base 3 at the installment groove 31. The base 3 defines several ring-shaped rims extending axially towards the dosing chamber 11. The installment groove 31 is defined between two of these rims. The base 3 comprises a further, particularly concentrically most inner rim 35, which defines the outlet passage 16. The blocking valve 21 is mounted by the inner rim 35 and by a clamp ring 71 clamping an annular clamp lip of the blocking valve 21 against the inner rim 35. Further, the clamp ring 71 is snap fitted within an inner installment groove defined by the most inner rim 35 and an intermediate rim also comprising an annular snap tap.

The sidewall 9 is made by a hard plastic material, as polypropylene or polyethylene, particulary to reduce adhesion forces with the floating plunger 39, which is vertically slideable within the dosing chamber 11, and allow fast reversal of the floating plunger 39 because of buoyancy forces acting on the floating plunger 39 submerged in the liquid, when the squeezing pressure is released. The floating plunger 39 has a downstream or front rim 41, providing a first effective sliding element with the cylindrical sidewall 9 and facing the discharge opening 17, and an upstream or rear rim 43, providing a second effective sliding element facing the drive opening 15. The upstream and downstream rims 41, 43 have the same maximum diameter being essentially equal to the inner diameter of the dosing chamber 11. The rims 41, 43 are circular and disc-shaped complementarily relative to the cylindrical sidewall 9 of the dosing chamber 11.

The floating plunger 39 is formed by two cross-sectional U-shaped thin walled bushing elements 45, 47 connected to each other in a telescopically slidable manner. By clamping the annular legs of the cross-sectional U-shaped bushing elements 45, 47, both bushing elements 45, 47 are releasably fixed to each other. The bushing elements 45, 47 define an essentially cylindrical interior volume of the plunger 39. The volume is adaptable by either telescopically displacing one bushing 45, 47 from the other or by changing the diameter of the interconnecting cylindrical body portions 49, 51 of the bushings 45, 47. The size of the volume can be adjusted in order to change the buoyancy characteristics of the floating plunger 39 submerged in the liquid. The container is in a position upright that means that the liquid dosing device 1 is positioned according to Figs. 2 and 9. However, for immediate dosing, the container should be positioned upside down so that the liquid dosing device 1 faces downwards (not shown in the drawings). As the upstream and the downstream rims 41, 43 each extend radially beyond the cylindrical body portions 49, 51, respectively, an annulus-shaped chamber 53 is formed between the rims 41, 43, the outer surface of the body portions 49, 51 and the cylindrical side wall 9.

In an initial operative condition of the liquid dosing device 1, starting the use of the liquid dosing device 1, no liquid pressure apart from atmospheric pressure is present. Liquid stored in the container enters the front compartment 14 of the dosing chamber 11 under the influence of gravity via charge opening 19. When the front compartment 14 is completely filled, the floating plunger 39 (against its gravity) due to buoyancy force is pushed upwards and towards the base plate 13 of the dosing chamber 11. As soon as the floating plunger 39 is in contact with the base plate 13 the dosing volume within the front compartment 14 is complete and maximal. As soon as a squeezing force is applied to the container the liquid pressure in the container is increased. Said liquid pressure acts on the rear disc of the floating plunger 39 via the drive opening 15. At the same time the pressure liquid in the dosing chamber 11 and the pressure on the closure element 23 of the blocking valve 21 increases. The closure element 23 of the blocking valve 21 is adapted to resist a predetermined pressure threshold before opening a passageway for the liquid through the blocking valve 21. As soon as the squeezing pressure acting on the valve closure element 23 exceeds the blocking valve threshold, the blocking valve 21 opens, thereby decreasing the pressure within the dosing chamber 11. The pressure gradient resulting from high squeezing pressure acting on the rear disc of the floating plunger 39 and the decreasing pressure within the dosing chamber 11 (the front compartment 14) causes the floating plunger 39 to move from its rest position (not shown) into a blocking position shown in Figs. 2 and 9. The floating plunger 39 pushes the liquid stored within the front compartment 14 of the dosing chamber 11 through valve slits 27 and the discharge opening 17.

Referring to Figs. 2 and 9, the liquid dosing device 1 is shown in an operating condition, in which the floating plunger 39 has arrived at its blocking position. The complete content of the front compartment 14 of the dosing chamber 11 has been drained through the valve opening 27 to the discharge opening 17.

If the squeezing pressure on the container is released, suction forces generated by reformation of the deformed container will reverse the pressure gradient, so that any liquid remaining at the valve closure member 23 is sucked back into the dosing chamber 11. The pressure acting on the upstream rim 43 of the floating plunger 39 is reversed so that the floating plunger 39 begins to uncover the charge openings 19. Liquid remaining in the dosing chamber 11 exerts buoyancy forces on the floating plunger 39. As soon as the charge openings 19 are partially opened, liquid streams back into the dosing chamber 11. The floating plunger 39 and its interior volume are dimensioned and adapted such that the buoyance force acting on the floating plunger 39 due to the liquid streaming into the dosing chamber 11 lifts the floating plunger 39 back into its rest position.

Taking a further look to the blocking position of the floating plunger it shall be clear that the floating plunger 39 will get in contact with a sealing lip 59, however, in any blocking position will not get in contact with the blocking valve 21. Therefore, the sealing lip 59 must have an elasticity and a rigidity in that for each theoretical and practical use conditions, a contact of the floating plunger 39 (i.e. the sealing lip 59) with the blocking valve 21 should be excluded in the blocking position.

To provide a reliable sealing of the dosing device 1, even if a high squeezing pressure is generated, a sealing lip 59 is provided either at the stop seat 55 or at the floating plunger 39 in order to shut-off the fluidal connection between the front compartment 14 and the outlet passage 16. Alternative solutions are shown in Figs. 2 to 8 and 9 to 15, respectively.

In a first preferred embodiment of the invention according to Figs. 2 to 8, the stop seat 55 is unitarily formed with the annular sealing lip 59. The stop seat 55 comprises an axially extending annular attachment portion 57, which is clamped between two axially extending annular rims of the dosing device 1 retaining the clamping lip 37 of the blocking valve 21, a tube portion 67 and the sealing lip 59, which sealingly engages in the blocking position with the floating plunger 39. The tube portion 67, the attachment portion 57 and the sealing lip 59 are injection-mold of one single piece of same plastic material, like polypropylene, polyethylene or the like.

The sealing lip 59 extends by about 2 mm to 3 mm from a plunger-sided portion of the tube position 67. The sealing lip 59 comprises a lip body 54 comprising an annular foot portion 58, which merges with the plunger-sided portion of the tube portion 67, and an annular sealing end 60, which forms a circumferentially closed sealing contact with the floating plunger 39. The sealing lip 59 is formed such that it is elastically deformable and has an elastic elongation in an axial direction, particularly defined by the axial extension of the outlet passage 16. Therefore, unevenness of the material itself can be compensated because the contact pressure between the floating plunger 39 and the sealing lip 59 leads to an elastic deformation and particularly to a clinging effect of the lip 59, whereby a reliable and strong sealing ability is provided. As can be seen, the sealing lip 59 radially extends, wherein along said extension, the cross-section of the sealing lip 59 continuously reduces to ensure the elastic deformation. The plunger-sided surface of the sealing lip 59 is formed convexly. The opposite surface of the sealing lip 59 is concavely shaped. The sealing lip comprises a cup-shape or fantail-shape including a centered throughhole 61.

According to the embodiment of Fig. 2, the floating plunger 39 comprises a contact surface facing the sealing lip 59 unitarily formed with the plunger-sided portion of the stop seat 55. The disc-like front end of the floating plunger 39 is recessed for forming a blind hole recess 73. The bottom of said recess 73 comes into seal engagement with the sealing lip 59 in the blocking position of the floating plunger 39. Particularly, the sealing lip 59 extends from the plunger-sided portion of the stop seat 55 radially inwardly towards the plunger 39. Said bottom of the recess 73 is made of hard plastic material, particularly same material as the sealing lip 59.

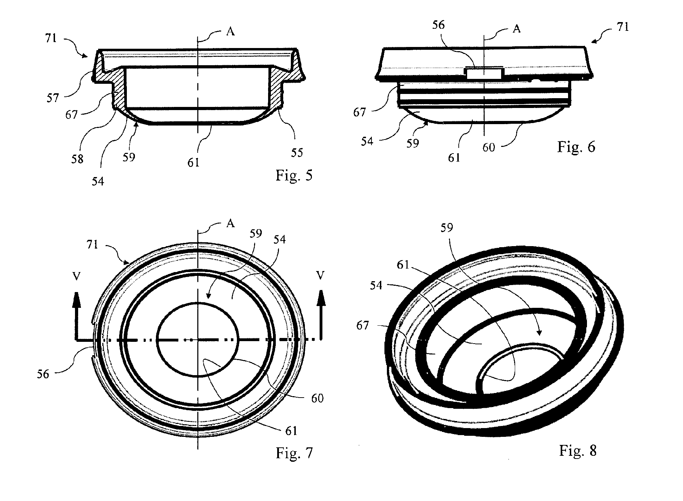

Referring to Figs. 5 to 8, a top view, a side view, a cross-sectional view and a perspective view of the stop seat 55 including the unitary sealing lip 59 of Fig. 2 are shown. The stop seat 55 is formed as a rotational symmetrical dome with the throughhole 61 in the center, particularly concentrically arranged with respect to axis A. A groove 56 is provided on an outer surface of the stop seat 55 to determine the circumferential position of the stop seat 55 to be mounted in the liquid dosing device 1.

The second embodiment of the invention is described in view of Figs. 9 to 15, however, for a better understanding of the description of figures, for the same elements and structures of the liquid dosing device, particularly the floating plunger 39, the stop seat 55 and the sealing lip 59, of Figs. 9 to 15 the same reference signs are used as in the drawings of the embodiment according to Figs. 2 to 8.

The embodiment of the liquid dosing device 1 according to Figs. 9 to 15 differentiates from the first embodiment particularly by the structure of the floating plunger 39 and the stop seat 55. The sealing lip 59 and the floating plunger 39 are manufactured, particularly injection-mold, of one single piece of same plastic material, as polyethylene, polypropylene or the like. The floating plunger 39 comprises a disc-like carrier portion 69 forming a seat-sided portion and holding the sealing lip 59. The fantail-shaped axially and radially extending sealing lip 59 is formed adjacent the front rim 41 of the floating plunger 39 and extends radially outwardly towards the stop seat 55.

For both embodiments, in order to be elastically deformable and to provide the improved sealing function, the sealing lip 59 comprises a cross-section which continuously reduces from its foot portion 58 up to the sealing end 60.

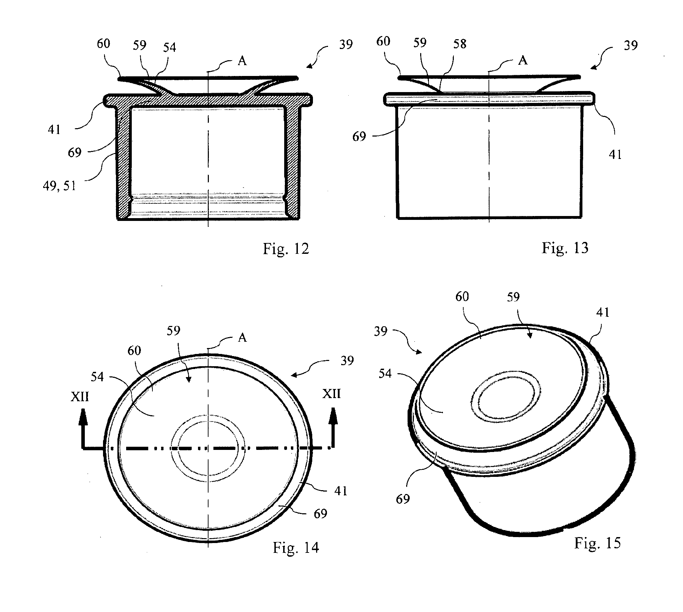

Referring to Figs. 12 to 15, a top view, a side view, a cross-sectional view and a perspective view of the floating plunger 39 according to the second embodiment are shown. As can be seen in Fig. 12, the sealing lip 59 comprises a fantail-shape, having a convexly formed surface facing to the stop seat 55. The opposite surface of the sealing lip 59 is concavely shaped.

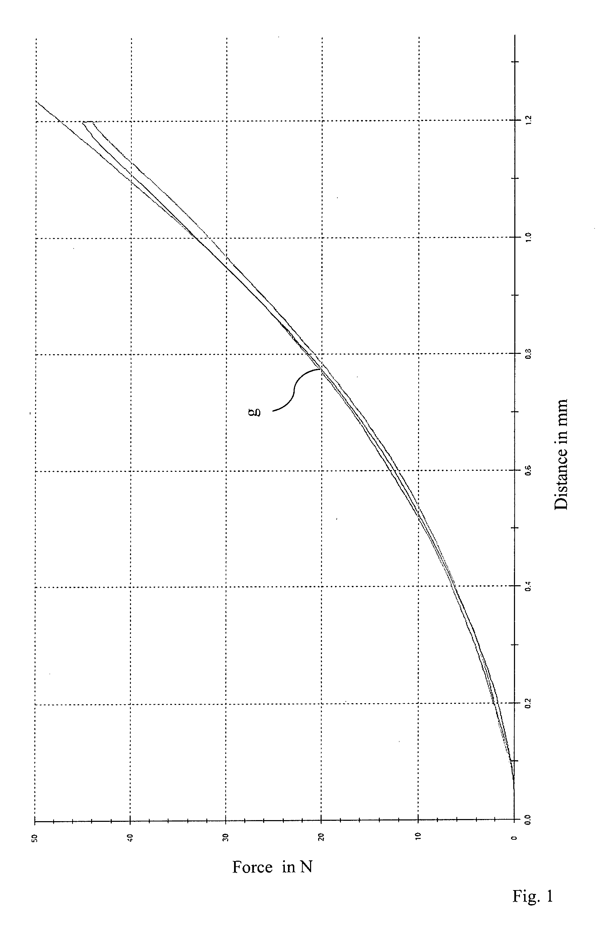

In Fig. 1, the influence of an axial elastic deformation of the sealing lip 59 of the stop seat 55 on the axial restoring force produced by the sealing lip 59 onto the floating plunger 39 is illustrated by the graphical gradient g for a result of measurements regarding a preferred embodiment of the liquid dosing device 1. When the floating plunger 39 presses on the stop seat 55 to block the liquid from entering the outlet passage 16, the sealing lip 59 experiences an elastic axial deformation, which corresponds to an axial shifting of the floating plunger 39 of up to 1.0 mm or 1.5 mm. The elastic elongation can be measured by a displacement between the axial position of the floating plunger 39 when it just contacts the sealing lip 59 and the axially displaced position when a pressure force is applied to the sealing lip 59. By the deformation of the sealing lip 59, the last applies axial elastic restoring force acting on the floating plunger 39. Said axial elastic restoring force can be measured by conventional load cells which are arranged at the upstream or rear end of the floating plunger 39. It shall be clear that those measurements shall be undertaken without the application of liquid, rather in a dry condition in the presence of standard environmental conditions.

It turned out that the gradient shown in graphical Fig. 1 represents a measuring result of a preferred embodiment of the invention. In a case of a 0.2 mm elastic elongation of the sealing lip, an elastic axial restoring force of about 2 N can be sensed. For an elastic elongation of 0.3 mm, an elastic axial restoring force of 4 N was measured, etc. It turned out that by the respective sealing lip geometry, an elastic deformation of the sealing lip 59 of up to 1.0 mm can be realized, on one hand-side tightly closing the outlet passage 16, on the other hand, a precise dosage volume can be maintained and easily predicted.

The features disclosed in the above description, the figures and the claims can be significant for the realization of the invention in the different embodiments either alone or in combination.

### List of reference signs

- 1: liquid dosing device
- 3: base
- 5: cap
- 6: nose
- 7: hollow body
- 8: thread
- 9: cylindrical sidewall
- 11: dosing chamber
- 12: rear compartment
- 13: base plate
- 14: front compartment
- 15: drive opening
- 16: outlet passage
- 17: discharge opening
- 19: charge openings
- 21: blocking valve
- 23: closure element
- 25: anchor ring
- 27: slit or opening
- 29: mounting rim
- 31: installment groove
- 33: snap tap
- 35: inner rim
- 37: base lip
- 39: floating plunger
- 41: downstream rim
- 43: upstream rim
- 45, 47: bushing elements
- 49, 51: body portions
- 53: annulus chamber
- 54: lip body
- 55: stop seat
- 56: groove
- 57: attachment portion
- 58: foot portion
- 59: sealing lip
- 60: sealing end
- 61: center throughhole
- 63,65: snap-over flaps
- 67: tube portion
- 69: carrier portion
- 71: clamp ring
- 73: sealing edge
- A: rotational axis
- g: gradient

## Claims

1. A liquid dosing (1) device for dispensing a metered dose of liquid from a squeezable container, comprising:
- an outlet passage (16) leading to a discharge opening (17);
- a dosing chamber (11) positioned behind said discharge opening (17) and having at least one entrance opening (19) allowing a charging flow of liquid from said container into said dosing chamber (11) under the influence of weight of liquid, and a drive opening (15) allowing a control flow of liquid from said container into said dosing chamber (11) in response on a rise of pressure of liquid in the squeezable container;
- a floating plunger (39) movably arranged in the dosing chamber (11) so as to advance upon said rise of pressure from a rest position in which under the influence of a lifting force of buoyancy said floating plunger (39) closes said drive opening (15), into a blocking position in which said floating plunger (39) blocks said outlet passage (16), wherein said floating plunger (39) when advancing into said blocking position, pushes said liquid charged into said dosing chamber (11), to said outlet passage (16);
- a stop seat (55) upon which said floating plunger (39) acts in its blocking position, and
- a sealing lip (59) for closing said outlet passage (16), being arranged such that a seat-sided portion of the floating plunger (39) or a plunger-sided portion of the stop seat (55) and said sealing lip (59) is formed, particularly injection-mold, of one single piece of the same plastic material.

2. A liquid dosing device (1) according to claim 1, wherein said sealing lip (59) protrudes from said seat-sided portion of the floating plunger (36) or from said plunger-sided portion of said stop seat (55) particularly by at least 1 mm, wherein particularly the sealing lip (59) comprises a lip body (54) comprising an annular foot portion (58) merging in the seat-sided portion or in the plunger-sided portion in continuously extending to an annular sealing end (60) forming a circumferentially closed sealing contact with the other seat-sided portion of the floating plunger (39) or the plunger-sided portion of the stop seat (55), wherein particularly the cross-section of said lip body (54) from said annular foot portion (58) to said sealing end (60) continuously reduces.

3. A liquid dosing device (1) according to claim 1 or 2, wherein said sealing lip (59) extends from said seat-sided portion of the floating plunger (39) or said plunger-sided portion of the stop seat (55) in a radial direction, wherein particularly the sealing lip (59) formed unitarily with said seat-sided portion of the float plunger (39) extends radially outwardly towards said stop seat (55) or said sealing lip (59) unitarily formed with said plunger-sided portion of the stop seat (55) extends radially inwardly towards the floating plunger, wherein particularly the radial extension of the sealing lip (59) unitarily formed with the seat-sided portion of the float plunger (39) is dimensioned such that a sealing end (60) of the sealing lip (59) is positioned vis-à-vis an annular edge of said plunger-sided portion of the stop seat (55) in the blocking position.

4. A liquid dosing device (1) according to one of the preceding claims, wherein said sealing lip (59) particularly formed unitarily with said plunger-sided portion of the stop seat (55) defines a particularly circular orifice.

5. A liquid dosing (1) device according to claim 1, wherein the sealing lip (59) is elastically deformable provides an elastic elongation in axial direction, particularly defined by the axial extension of the outlet passage (16), particularly ranging up to 1.0 mm, preferably from 0.4 mm to 1.5 mm, wherein particularly said elastic elongation is at least 0.02 mm or at least 0.1 mm, particularly in a range of 0.02 mm to 0.3 mm, when said floating plunger (39) acts on said sealing lip (59) by a force of pressure of 2 N or 1 N, particularly said elastic elongation being at least 0.15 mm or at least 0.2 mm, particularly in a range of 0.15 mm to 0.4 mm, if a force of pressure of 4 N or 2 N is applied, particularly said elastic elongation being at least 0.3 mm or at least 0.4 mm, particularly in a range of 0.2 mm to 0.7 mm, if a force of pressure of 10 N, 8 N or 6 N is applied, particularly said elastic elongation being at least 0.5 mm or at least 0.6 mm, particularly in a range of 0.4 mm to 0.9 mm, if a force of pressure of 20 N or 15 N is applied, particularly said elastic elongation being at least 0.6 mm or at least 0.8 mm, particularly in a range of 0.6 mm to 1.2 mm, if a force of pressure of 30 N or 25 N is applied, particularly said elastic elongation being at least 0.8 mm or at least 0.9 mm, particularly in a range of 0.8 mm to 1.4 mm, if a force of pressure of 50 N or 40 N is applied, particularly said elastic elongation being at least 0.9 mm or at least 1.0 mm, particularly in a range of 0.9 mm to 1.7 mm, if a force of pressure of 60 N or 70 N is applied.

6. A liquid dosing device (1) according to claim 1 or 2, wherein said sealing lip is designed such that an axial restoring force of more than 0.4 N is delivered by the sealing lip (59) in case of an elastic elongation of said sealing lip of at least 0.1 mm, 0.2 mm or 0.3 mm, and/or a restoring force of more than 2 N or 2,5 N in case of an elastic elongation of said sealing lip (59) of more than 0.2 mm or 0.3 mm, and/or a restoring force of more than 3 N, 4 N or 5N in case of an elastic elongation of at least 0.3 mm or 0.4 mm, and/or a restoring force of more than 6 N, 8 N or 10 N in case of an elastic elongation of at least 0.5 mm or 0.6 mm, and/or a restoring force of more than 10 N or 15 N in case of an elastic elongation of at least 0.6 mm, 0.7 mm or 0.8 mm, and/or a restoring force of more than 20 N in case of an elastic elongation of at least 0.8 mm or 0.9 mm, a restoring force of at least 20 N or 25 N in case of an elastic elongation of at least 1.0 mm or 1.1 mm.

7. A liquid dosing device (1) according to one of the preceding claims, wherein the sealing lip (59) forms a sealing surface facing the seat-sided portion of the floating plunger (39) or the plunger-sided portion of said stop seat (55), said sealing surface being formed convexly, particularly the sealing lip (59) comprising a surface opposite the sealing surface being formed convexly.

8. A liquid dosing device (1) according to one of the preceding claims, wherein said sealing lip (59) has a rotationally symmetrical shape, particularly being fantail-shaped or being cup-shaped, particularly having a central orifice.

9. A liquid dosing device (1) according to one of the preceding claims, wherein said stop seat (55) is realized by a tube portion (67) forming at least part of the outlet passage (16), wherein particularly said tube portion (67) is part of a mounting ring comprising an attachment portion (57) for being attachable to a cover cap (5) covering the discharge opening (17), wherein preferably the attachment portion (57), the tube portion (67) and the sealing lip (59) is unitarily manufactured of one single piece of the same plastic material, wherein particularly said mounting ring is designed to fix a blocking valve (21) disposed in the outlet passage (16) and made of an elastic material, as an elastomeric material, being softer than the plastic material of said sealing lip (59), to said cap (5).

10. A liquid dosing device (1) according to claim 9, wherein said blocking valve (21) is arranged between said discharge opening (17) and said at least one charge opening (19) in front of the dosing chamber (11).

11. A liquid dosing device (1) according one of the preceding claims, **characterized in that** the floating plunger (39) comprising a carrier portion (69) forming the seat-sided portion and holding said sealing lip (59), wherein particularly said carrier portion (69) and the sealing lip (59) is manufactured, particularly injection-mold of one single piece of plastic, wherein particularly said floating plunger (39) comprises a closed cavity partially confined by said carrier portion (69).

12. A liquid dosing device (1) according to one of the preceding claims, wherein said floating plunger (39) comprises a contact surface facing the sealing lip (59) unitarily formed with said plunger-sided portion of the stop seat (55), and is recessed such that an annular, particularly circular sealing end (60) of said sealing lip (59) is received in the recess in the blocking position, wherein particularly said recess is formed as a blind hole in the body of said floating plunger (39).
